# FASCICULE DE BREVET EUROPEEN

(11) **EP 0 953 435 B1**
(45) Date de publication et mention de la délivrance du brevet: **31.03.2004**
(21) Numéro de dépôt: 99107552.4
(22) Date de dépôt: 15.04.1999
(51) Int. Cl.: B29D 30/24, B29D 30/32

(54) **Procédé de fabrication de pneumatiques et tambour d'assemblage permettant la mise en oeuvre du procédé**
Verfahren zur Herstellung von Luftreifen und Reifenaufbautrommel zur Durchführung dieses Verfahrens
Tyre manufacturing process and building drum to be used for carrying out the process.

(30) Priorité: 27.04.1998 FR 9805642
(43) Date de publication de la demande: 03.11.1999
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Cordaillat, Dominique, 63160 Billom (FR); Muhlhoff, Olivier, 63100 Clermont-Ferrand (FR); Panighel, Bruno, 63510 Aulnat (FR)
(74) Mandataire: Cohen, Sylvia

(56) Documents cités:
- EP-A- 0 792 739
- EP-A- 0 808 707
- DE-A- 2 211 657
- DE-A- 2 221 806
- DE-B- 1 262 581
- GB-A- 947 182
- JP-A- 56 089 935
- US-A- 3 093 531
- US-A- 3 178 327
- US-A- 3 971 694

## Description

La présente invention concerne un procédé de fabrication de pneumatiques et un tambour d'assemblage permettant la mise en oeuvre du procédé.

L'invention concerne plus particulièrement la fabrication d'un pneumatique comprenant une armature de carcasse, au moins une tringle de renforcement dans chacun des bourrelets du pneumatique autour de laquelle l'armature de carcasse est enroulée en formant un retournement, ledit pneumatique étant tel que, contrairement à ce qui est généralement réalisé, le retournement de l'armature de carcasse soit disposé entre la tringle et l'armature de carcasse elle-même. Pour une plus complète compréhension du pneumatique, on peut se référer notamment à la demande de brevet FR-2 716 645 (figure 2).

Il est connu, afin de réaliser des retournements de l'armature de carcasse autour de la tringle, d'équiper des tambours d'assemblage de dispositifs de retroussage de l'armature de carcasse. On peut citer, à titre d'exemple, la publication US 3 698 987 qui décrit un dispositif de retroussage comprenant une première vessie gonflable ayant l'allure générale d'un tore, et dont le déplacement nécessaire pour effectuer l'opération de retroussage est réalisé grâce à un élément intermédiaire constitué par une seconde vessie gonflable ou une virole métallique qui effectue une poussée transversale sur la première vessie. Dans le brevet US 4 087 306, le dispositif de retroussage est constitué par une vessie de retroussage qui développe par elle-même, sous le seul effet de l'élévation de la pression de gonflage, le mouvement de roulement dans le sens transversal nécessaire pour effectuer le retroussage de l'armature de carcasse.

Ces tambours et dispositifs de retroussage permettent la fabrication de pneumatiques en mettant en oeuvre une étape de procédé consistant, une fois l'armature de carcasse positionnée sur le tambour non gonflé, c'est-à-dire à son développement circonférentiel le plus petit, et les tringles en regard axialement de leur position d'immobilisation par rapport à la carcasse, à gonfler le tambour afin de figer le positionnement des tringles sur l'armature de carcasse, puis à actionner le dispositif de retroussage permettant de réaliser le retournement de chaque extrémité latérale de l'armature de carcasse autour de la tringle correspondante.

Le brevet DE A 2 211 657 correspondant au préambule de la revendication 1, décrit un tambour comprenant un dispositif mécanique comportant une pluralité de doigts de relevage répartis circulairement autour de l'arbre central.

De tels tambours ne prêtent pas à une modification dans le procédé de fabrication qui viserait à ce que le retournement de l'armature de carcasse soit situé sous la tringle. Dans la mesure où le fonctionnement du dispositif de retroussage est assujetti à la présence d'un point fixe, constitué par la tringle, autour duquel est réalisé le retournement de l'armature de carcasse, on ne voit pas comment on pourrait retourner l'armature de carcasse en utilisant la tringle pour imposer l'endroit de la pliure, tout en enfilant le retournement radialement sous ladite tringle.

L'invention a donc pour objet un procédé de fabrication d'un pneumatique dans lequel le retournement de l'armature de carcasse est positionné entre la tringle et ladite armature, et un tambour d'assemblage permettant la mise en oeuvre de ce procédé.

Selon l'invention, le procédé de fabrication d'un pneumatique comporte les étapes suivantes :
- déposer une armature de carcasse sur une surface de réception généralement cylindrique expansible radialement et sur des surfaces d'appui qui prolongent axialement extérieurement ladite surface de réception,
- puis déposer un profilé de mélange caoutchouteux sur une des extrémités de l'armature de carcasse au-dessus des surfaces d'appui,
- puis déployer radialement les surfaces d'appui de façon à permettre le soulèvement de ladite extrémité de l'armature de carcasse et le basculement du profilé axialement vers le centre de la surface de réception,
- puis retourner ladite extrémité autour du profilé de mélange caoutchouteux en entraînant cette dernière axialement vers le centre de la surface de réception
- et positionner une tringle sur le retournement ainsi réalisé et procéder à l'expansion de la surface de réception afin de fixer radialement et axialement la tringle.

Avantageusement, le retournement de l'extrémité de l'armature de carcasse autour du profilé de mélange caoutchouteux est réalisé en relevant radialement ladite extrémité, en rapprochant axialement la tringle vers le centre de l'armature de carcasse jusqu'à l'appui de l'extrémité sur la tringle, et en poursuivant l'avancée axiale de la tringle en synchronisme avec l'expansion de la surface de réception.

Plus particulièrement, on relève radialement l'extrémité de l'armature de carcasse en appuyant radialement vers l'extérieur du tambour, juste sous le profilé de mélange caoutchouteux. On réalise ainsi un retournement de l'armature de carcasse autour du profilé en opérant un basculement de ce dernier.

L'invention concerne également un tambour d'assemblage expansible radialement pour la fabrication de pneumatique, ledit tambour ayant un corps présentant une surface de réception des produits à assembler, ledit corps étant monté sur un arbre central, caractérisé par le fait qu'il comporte au moins un dispositif de relevage situé à une des extrémités de la surface de réception, qui comprend une pluralité de doigts de relevage répartis circulairement autour de l'arbre central, lesdits doigts s'étendant sensiblement radialement et possédant une surface d'appui des produits à assembler, lesdits doigts étant déployables essentiellement radialement vers l'extérieur du tambour par translation radiale sous l'action de moyens de commande entre une position de repos dans laquelle lesdites surfaces d'appui constituent des prolongements de la surface de réception et une position déployée dans laquelle les surfaces d'appui constituent un surface cylindrique de diamètre supérieur à la surface de réception.

Précisons que l'on entend par « sensiblement radialement » le fait que la direction de chaque doigt de relevage soit radiale ou forme un angle très faible (de l'ordre de 10°) avec la direction radiale, et par « essentiellement radialement » le fait que l'éventuel mouvement axial, s'il existe, des doigts de relevage est négligeable dans l'action recherchée.

Un tel dispositif de relevage comportant des éléments déployables radialement permet de réaliser un soulèvement, par rapport à la surface de réception, de l'extrémité des produits à assembler et, du fait de la constitution des éléments sous forme de doigts s'étendant sensiblement radialement, de laisser libre et donc accessible ladite extrémité soulevée.

D'autres caractéristiques et avantages de l'invention apparaîtront à la lecture d'un exemple de réalisation de l'invention en référence au dessin annexé dans lequel :
- la figure 1 est une représentation perspective partiellement en coupe d'un tambour conforme à l'invention,
- la figure 2 est une coupe axiale partielle du tambour représenté à la figure 1 dans deux configurations différentes : en haut en position rétractée et en bas en position expansée,
- la figure 3 est un agrandissement d'un doigt de relevage du tambour représenté à la figure 2,
- la figure 4 est une représentation perspective partielle du doigt de relevage représenté à la figure 3, agencé dans un élément support,
- les figures 5A et 5B sont des agrandissements d'un doigt de relevage du tambour représenté à la figure 2 selon une variante de réalisation de ce doigt dans deux positions de fonctionnement,
- la figure 6 est une représentation perspective du doigt de relevage représenté aux figures 5A et 5B,
- les figures 7A à 7F sont des représentations schématiques en coupe axiale partielle illustrant les différentes phases de la fabrication d'un pneumatique conformément à l'invention.

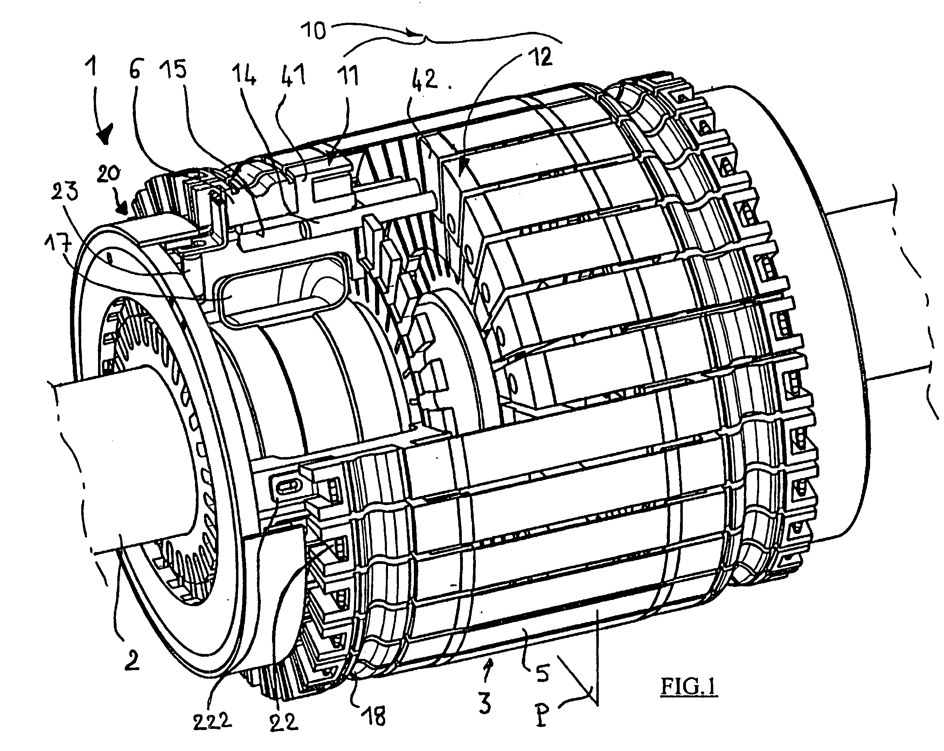

Selon la figure 1, le tambour 1 d'assemblage, expansible radialement, comprend un corps 10 monté sur un arbre central 2 et présentant une surface 3 de réception des produits à assembler.

Le corps 10 comprend deux demi-cylindres 11 déplaçables axialement autour de l'arbre central 2 afin de régler l'écartement des tringles du pneumatique à réaliser, les deux demi-cylindres 11 étant séparés par une couronne centrale 12 fixe par rapport à l'arbre central 2.

Le tambour décrit dans cet exemple de réalisation de l'invention étant symétrique par rapport à un plan P médian perpendiculaire à l'axe du tambour, on ne décrira dans la suite de la description que le demi-tambour situé à gauche du plan P sur la figure 1. Il est clair que le choix du tambour décrit ici ne limite pas la portée de l'invention, à un tambour symétrique.

Le demi-cylindre 11 et la couronne 12 sont constitués par une pluralité de segments respectivement 41 et 42 respectivement en vis-à-vis. Les segments 41 sont juxtaposés circonférentiellement autour de l'arbre central 2, et de même, les segments 42 sont juxtaposés circonférentiellement autour de l'arbre central 2. Pour assurer la liaison des différents éléments du corps 10, chaque segment 41 est est guidé par rapport au segment 42 en vis-à-vis au moyen d'une tige 14 dont une extrémité traverse le segment 42 et dont l'autre extrémité est montée à coulissement dans un alésage 15 portée par le segment 41.

Afin de permettre au tambour 1 d'atteindre sa position expansée, les segments 41, 42 sont mobiles radialement sous l'action d'une chambre d'expansion 17 disposée sous lesdits segments 41 et gonflable sous la commande de vérins. Les segments 41 entraînent dans leur mouvement radial les segments 42 de la couronne 12 par l'intermédiaire des tiges 14.

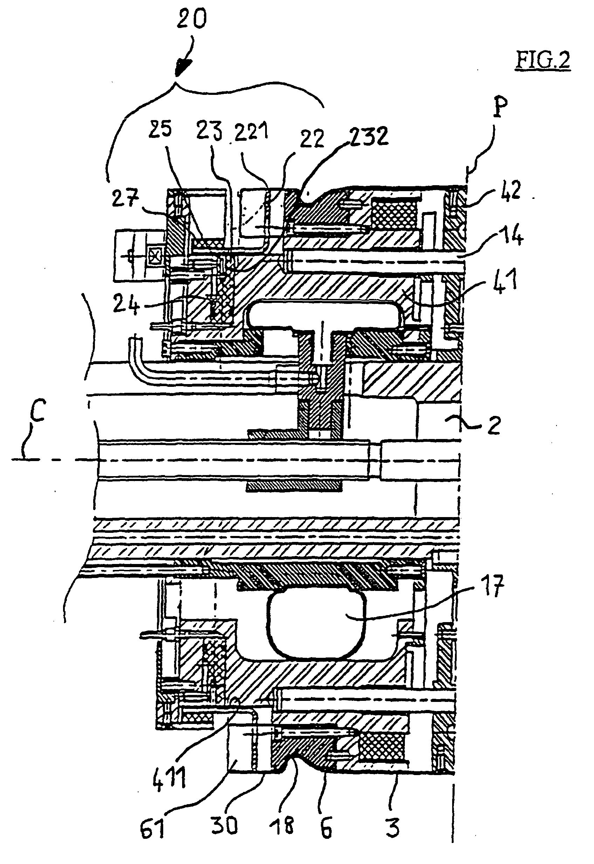

La figure 2 illustre ces deux configurations :
- au-dessus de l'axe C de l'arbre central 2, le tambour 1 est représenté en position rétractée, la chambre d'expansion 17 étant dégonflée,
- au-dessous de l'axe C de l'arbre central 2, le tambour 1 est représenté en position expansée, la chambre d'expansion 17 étant gonflée.

Des plaquettes 5 (figure 1) sont fixées par des vis non représentées sur les segments 42 de la couronne 12. Ces plaquettes 5 recouvrent au moins partiellement les segments 41 du demi-cylindre 11 afin d'assurer une continuité entre la couronne 12 et le demi-cylindre 11 pour les produits à assembler quelle que soit la position axiale du demi-cylindre 11. La couronne 12 permet, de plus, d'assurer un maintien axial des plaquettes 5 lors de l'expansion radial du tambour 1.

Comme le montrent les figures 1 et 2, les segments 41 portent à leurs extrémités latérales orientées extérieurement au tambour 1, des éléments supports 6 portant des gorges de réception 18 des tringles du pneumatique. La surface de réception 3 des produits à assembler est ainsi constituée par l'ensemble des surfaces extérieures des plaquettes 5, des zones des segments 41 non recouvertes par lesdites plaquettes et des surfaces extérieures des éléments supports 6.

Le tambour 1 conforme à l'invention porte un dispositif de relevage 20 disposé à l'extrémité libre 30 de la surface de réception 3 constituée par les surfaces extérieures des éléments supports 6. Il est clair que dans l'exemple choisi, le tambour 1 étant symétrique, il comporte un dispositif de relevage à chacune des extrémités de la surface de réception.

Dans la suite de la description, on entend par le terme « doigt » un profilé de faible section.

Le dispositif de relevage 20 comporte une pluralité de doigts de relevage 22, de section rectangulaire, répartis circulairement autour de l'arbre central 2 et s'étendant sensiblement radialement.

Ces doigts de relevage 22 sont disposés axialement extérieurement par rapport au centre du tambour 1, à la gorge de réception 18 à une faible distance de celle-ci et présentent respectivement une surface d'appui 221 des produits à assembler. Les doigts 22 sont montés à déplacement radial respectivement sur les segments 41, lesdits doigts 22 étant solidaires des segments 41 dans le mouvement d'expansion du tambour 1.

Ainsi, les doigts de relevage 22 sont déployables radialement vers l'extérieur du tambour 1 par translation radiale à partir d'une position de repos dans laquelle les surfaces d'appui 221 constituent un prolongement de la surface de réception 3, vers une position déployée dans laquelle les surfaces d'appui 221 constituent une surface cylindrique coaxiale à l'arbre central 2, de diamètre supérieur à celui de la surface 3.

Ces doigts de relevage 22 offrent ainsi aux produits à assembler une pluralité de surfaces d'appui 221 discontinues et réparties circonférentiellement. En position déployée, les zones d'extrémité des produits reposant sur les surfaces d'appui 221 sont donc soulevées par rapport à la partie centrale desdits produits reposant sur la surface de réception 3.

Avantageusement, les extrémités libres des doigts de relevage 22, c'est-à-dire radialement extérieures au tambour 1, sont constituées par un galet 28 monté libre en rotation autour d'un axe 29 et qui porte ainsi la surface d'appui 221. Ce galet 28 permet d'éviter de créer des tensions au niveau des produits soulevés lors du déploiement des doigts de relevage 22 en assurant, dans cette phase, un contact « roulant » entre les doigts et les produits.

Chaque doigt 22 coulisse à l'intérieur d'une rainure 60 creusée dans l'élément support 6 correspondant et qui débouche sur la surface extérieure dudit élément. Plus précisément, l'extrémité libre 61 de chaque élément support 6, située extérieurement au tambour 1 par rapport à la gorge de réception 18, présente une section en U vue en coupe par plan perpendiculaire à un rayon, les branches du U s'étendant dans des directions axiales. Cette disposition permet, au moment de la pose des produits dont les extrémités vont reposer sur les surfaces d'appui 221, les doigts de relevage 22 étant au repos, d'offrir aux dites extrémités une surface de réception étendue tout autour des surfaces 221. Les extrémités de ces produits sont alors supportées également par les surfaces extérieures 62 en U des extrémités 61 des éléments support 6, ce qui contribue à l'obtention d'un positionnement correct sur le tambour 1 des produits.

Dans ce qui suit, les mêmes références désignent les pièces communes aux différentes variantes de réalisation du dispositif de relevage.

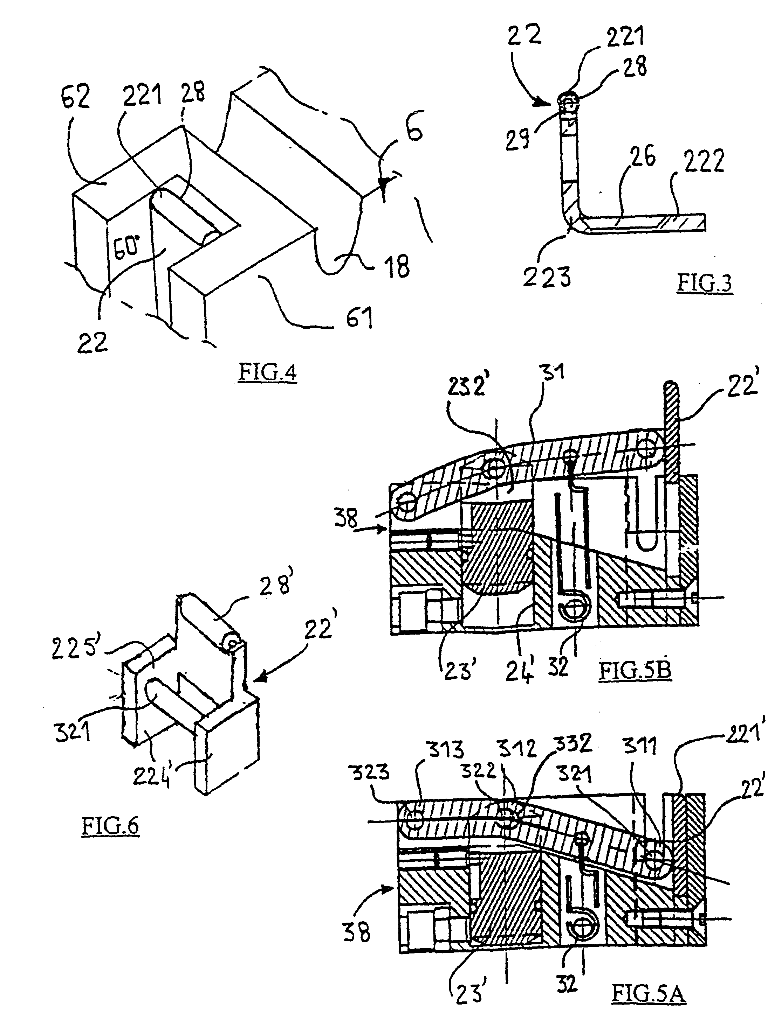

Selon une première variante de réalisation du dispositif de relevage 20 représentée sur les figures 2 et 3, l'extrémité 223 radialement intérieure au tambour 1 de chaque doigt de relevage 22 porte un prolongement 222 axial. Chaque prolongement 222 est, en position de repos des doigts de relevage 22, en appui sur une surface support 411 portée par le segment 41 correspondant.

Chaque doigt de relevage 22 est actionné par un vérin 23, le prolongement 222 dudit doigt étant fixé sur une extrémité 232 du piston du vérin 23 par l'intermédiaire de vis 25. Chaque vérin d'actionnement 23 est logé dans une gorge 24 portée par le segment 41 correspondant, à l'intérieur de laquelle le piston du vérin peut coulisser et qui débouche dans la surface support 411 dudit segment 41. La course des vérins d'actionnement 23 limite le déplacement radial des doigts de relevage 22.

La fixation des doigts de relevage 22 sur les segments 41 correspondant est ainsi réalisée par la fixation desdits doigts sur les vérins d'actionnement 23, eux-mêmes fixés directement sur les segments 41. De plus, le positionnement des doigts de relevage 22 par rapport aux vérins 23 et donc par rapport aux segments 41 est réglable. A cet effet, le prolongement axial 222 de chaque doigt de relevage 22 porte une lumière 26 permettant le passage de la vis 25. Le positionnement de la vis 25 dans cette lumière 26 règle le positionnement axial du doigt de relevage 22 par rapport au vérin 23 solidaire axialement du segment 41 correspondant et par conséquent le positionnement de la vis 25 dans la lumière 26 règle l'écartement axial du doigt 22 par rapport à l'élément support 6 correspondant. Effectivement, comme on le verra plus précisément à la lecture du procédé de fabrication, il est intéressant de pouvoir ajuster le positionnement axial des doigts de relevage notamment en fonction des dimensions des produits posés.

Afin d'assurer le retour en position de repos des doigts de relevage 22, une ceinture élastique de rappel 27 entoure l'ensemble des prolongements axiaux 222.

Selon une seconde variante de réalisation du dispositif de relevage 20' représentée sur les figures 5A, 5B et 6, les doigts de relevage 22' sont montés à déplacement radial respectivement sur une base 38 fixée sur le segment 41 correspondant. Les vérins d'actionnement 23' des doigts de relevage 22' sont également portés respectivement par la base 38 correspondante dans une gorge 24' à l'intérieur de laquelle le piston de chaque vérin coulisse.

Les bases 38 sont réglables en position axiale par rapport aux éléments supports 6 par une fixation classique non représentée telle que des vis.

Chaque doigt de relevage 22' est relié par l'intermédiaire d'une bielle coudée 31, au vérin 23' de la manière suivante :
- une des extrémités 311 de la bielle 31 est articulée autour d'un axe 321 monté entre un premier prolongement axial 224' porté par un bord latéral du doigt de relevage 22' et un deuxième prolongement axial 225' porté par l'autre bord latéral dudit doigt, l'extrémité 311 portant un trou oblong de passage de l'axe 321,
- l'autre extrémité 313 de la bielle 31 est articulée autour d'un axe 323 fixé sur le segment 41 correspondant,
- le coude 312 de la bielle 31 est articulé autour d'un axe 322 fixé sur l'extrémité 232' du piston du vérin d'actionnement 23', le coude 312 portant un trou oblong 332 de passage de l'axe 322.

Les figures 5A et 5B illustrent plus en détails les positions respectives des pièces portées par la base 38, respectivement pour les positions de repos et déployée du doigt de relevage 22'; la figure 6 présente en perspective un doigt de relevage 22', illustrant une variante de réalisation dans laquelle l'extrémité libre dudit doigt porte un galet 28' monté libre en rotation.

Afin d'assurer le retour en position de repos de chaque doigt de relevage 22', un ressort de rappel 32 est monté entre chaque segment 41 et la bielle 31 correspondante, l'extrémité 223' radialement intérieure au tambour 1 de chaque doigt de relevage 22' étant par ailleurs en appui en position de repos dudit doigt sur une surface de support 411' portée par le segment 41.

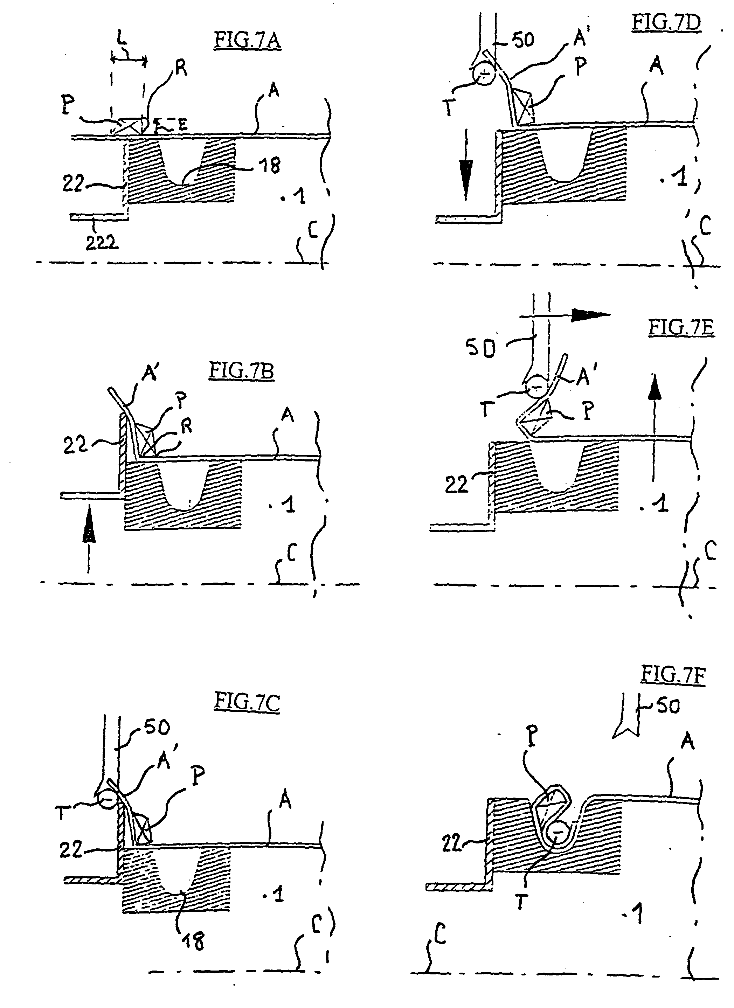

On décrira dans ce qui suit, en référence aux figures 7A à 7F, le procédé de fabrication d'un pneumatique à armature de carcasse radiale de tourisme comprenant une armature de carcasse, au moins une tringle de renforcement dans chacun des bourrelets dudit pneumatique, et plus particulièrement la réalisation d'un de ces bourrelets dans lequel l'armature de carcasse forme un retournement disposé entre la tringle et l'armature de carcasse elle-même.

Bien entendu, le procédé de fabrication permet indifféremment la réalisation d'un pneumatique avec un seul bourrelet du type décrit ci-dessus ou deux bourrelets de ce type, et l'exemple choisi d'un pneumatique de tourisme à carcasse radiale ne saurait limiter l'invention à ce seul type de pneumatique.

L'appareillage permettant la mise en oeuvre du procédé comprend notamment le tambour 1 et un guide-tringle 50 déplaçable axialement, coaxialement à l'arbre central 2. Ce guide-tringle 50 comprend un anneau de transfert d'une tringle, comportant des préhenseurs agissant radialement et répartis sur sa circonférence, pour assurer une tenue concentrique de la tringle par rapport au tambour 1.

On a choisi ici le dispositif de relevage 20 du tambour 1 comprenant les doigts de relevage 22. Cependant, on aurait également pu décrire l'utilisation des doigts de relevage 22', qui se déduit aisément de ce qui suit.

Le dispositif de relevage 20 du tambour 1 étant au repos, les surfaces d'appui 221 des doigts de relevage 22 prolongent la surface de réception 3. On dépose une nappe de câbles textiles sur la surface de réception 3 du tambour 1 et sur ses prolongements latéraux constitués par les surfaces 62 des profilés en U et les surfaces d'appui 221 des doigts de relevage 22. Cette nappe dépasse axialement extérieurement du tambour 1, par rapport aux doigts de relevage 22. Cette nappe constitue dans l'exemple décrit ici, à elle seule l'armature de carcasse A.

On dépose ensuite un profilé de mélange caoutchouteux P sur la zone d'extrémité latérale de l'armature de carcasse A, axialement à l'extérieur de la gorge de réception 18. Ce profilé P possède dans l'exemple décrit une section ayant la forme d'un quadrilatère mais il est clair qu'on peut envisager d'autres formes de section. Par ailleurs, afin d'avoir un profilé P suffisammment dur, on choisira de préférence un mélange caoutchouteux ayant à une viscosité Mooney ML (1+4) à 100°C mesurée selon la norme ASTM:D-1646, supérieure ou égale à 70.

Comme le montre la figure 7A, le profilé P est déposé au-dessus des surfaces d'appui 221 des doigts de relevage 22 afin de permettre le basculement de ce dernier lors du déploiement des doigts. En effet, le point R constituant un point de changement de rigidité par rapport à l'armature de carcasse A, va être utilisé pour maîtriser la réalisation d'un retournement de l'armature de carcasse A et donc d'une rotation de celle-ci autour de ce point R. Le retournement va donc être possible sans la présence d'une tringle qui habituellement constitue le point fixe autour duquel s'effectue la rotation.

Mais il est également judicieux que le positionnement du profilé permette d'obtenir, dans un second temps, le basculement dudit profilé P dans la gorge de réception 18. Par conséquent, on choisira avantageusement un réglage de la position axiale des doigts de relevage 22 par rapport à la gorge de réception 18, fonction de l'épaisseur E du profilé P.

En désignant par « L » la longueur du profilé qui repose sur l'armature de carcasse A, on peut positionner à titre d'exemple le profilé P par rapport aux doigts de relevage 22 de sorte que ces derniers soient à une distance comprise entre L/3 et 2L/3 du point de changement de rigidité R.

Les doigts de relevage 22 sont alors déployées sous l'action des vérins 23. Le profilé P est ainsi soulevé et tourne autour du point R, et l'extrémité A' de l'armature de carcasse A est également soulevée. Ne reposant sur aucune surface, l'extrémité A' reste libre comme le montre la figure 7B.

Le guide-tringle 50 portant la tringle T est alors avancé axialement vers l'armature de carcasse jusqu'à ce que l'extrémité libre de ladite armature vienne au contact sur la tringle T, comme représenté sur la figure 7C. Il s'agit dans cet exemple d'une tringle de type "tressé", c'est-à-dire une tringle formée d'une âme autour de laquelle sont enroulés un(des) fil(s) ou câble(s) sur une ou plusieurs couches suscpetibles de tourner autour de l'âme.

Selon la figure 7D, l'alimentation des vérins d'actionnement 23 est alors arrêtée et les doigts de relevage 22 retournent en position de repos grâce à la ceinture de rappel 27, l'extrémité A' de l'armature de carcasse A étant alors en appui uniquement sur la tringle T.

On synchronise alors l'avancée du guide-tringle 50 avec l'expansion du tambour par les chambres d'expansion, ce qui soulève radialement les segments 41, la tringle T entraînant avec elle l'extrémité A' de l'armature de carcasse A et réalisant le retournement qui s'effectue autour du profilé P, comme représenté sur la figure 7E.

Une fois la tringle T en position axiale correspondant à la position définitive souhaitée, on lâche la tringle et on finit l'expansion du tambour jusqu'à sa position expansée afin de fixer axialement et radialement la position de la tringle T, la tringle T et le profilé P venant alors se loger dans la gorge de réception 18 comme on le voit sur la figure 7F.

On pose ensuite les autres produits constitutifs du pneumatique et on procède à la vulcanisation de ce dernier. L'invention ne concerne pas cette partie de la fabrication. De nombreuses méthodes sont disponibles à l'homme du métier; c'est pourquoi il est inutile d'aborder cet aspect de la fabrication dans le contexte de la présente invention.

## Revendications

1. Tambour d'assemblage expansible radialement pour la fabrication de pneumatique (1), ledit tambour ayant un corps (10) présentant une surface de réception (3) des produits à assembler, ledit corps étant monté sur un arbre central (2), le dit tambour comprenant au moins un dispositif de relevage (20) formé d'une pluralité de doigts de relevage (22, 22') répartis circulairement autour de l'arbre central (2), **caractérisé en ce que** lesdits doigts (22, 22') s'étendent sensiblement radialement et possèdent une surface d'appui (221) des produits à assembler, lesdits doigts (22, 22') étant déployables essentiellement radialement vers l'extérieur du tambour (1) par translation radiale sous l'action de moyens de commande (23, 23') entre une position de repos dans laquelle lesdites surfaces d'appui (221) constituent des prolongements de la surface de réception (3) et une position déployée dans laquelle les surfaces d'appui (221) constituent une surface cylindrique de diamètre supérieur à la surface de réception (3).

2. Tambour selon la revendication 1, **caractérisé par le fait que** les moyens de commande comprennent des vérins d'actionnement (23, 23') respectivement de chaque doigt de relevage (22, 22'), la course de chaque vérin d'actionnement (23, 23') limitant le déplacement radial du doigt de relevage (22, 22') correspondant.

3. Tambour selon l'une quelconque des revendications 1 ou 2, **caractérisé par le fait que** chaque doigt de relevage (22, 22') est monté coulissant dans une rainure (60) creusée à l'extrémité considérée (30) de la surface de réception (3) et qui débouche sur ladite surface de réception.

4. Tambour selon l'une quelconque des revendications 1 à 3, **caractérisé par le fait que** l'extrémité (223) radialement intérieure au tambour (1) de chaque doigt de relevage (22) porte un prolongement (222) axial, lesdits prolongements axiaux (222) étant entourés par une ceinture de rappel (27) des doigts de relevage (22) dans leur position de repos.

5. Tambour selon l'une quelconque des revendications 2 ou 3, **caractérisé par le fait que** chaque doigt de relevage (22') est relié au vérin d'actionnement (23') correspondant par l'intermédiaire d'une bielle (31) sur laquelle agit un ressort de rappel (32).

6. Tambour selon l'une quelconque des revendications 1 à 5, **caractérisé par le fait que** l'extrémité du doigt de relevage (22, 22'), radialement extérieure au tambour (1), porte un galet (28, 28') monté libre en rotation.

7. Tambour selon l'une quelconque des revendications 1 à 6, **caractérisé par le fait que** les doigts de relevage (22, 22') sont déplaçables axialement par rapport à la surface de réception (3) afin de régler l'écartement axial relatif des doigts par rapport à ladite surface de réception.

8. Tambour selon l'une quelconque des revendications 1 à 7, **caractérisé par le fait que** les doigts de relevage (22, 22'), sont disposés axialement extérieurement à la gorge de réception des tringles (18) par rapport au centre du tambour (1).

9. Appareillage pour la fabrication de pneumatique, ledit appareillage comportant au moins un tambour (1) selon l'une quelconque des revendications 1 à 8 et un guide-tringle déplaçable axialement, coaxialement à l'arbre central (2).

10. Procédé de fabrication d'un pneumatique, **caractérisé par le fait qu'**il comporte les étapes suivantes :
- déposer une armature de carcasse (A) sur une surface de réception (3) généralement cylindrique expansible radialement et sur des surfaces d'appui (221) qui prolongent axialement extérieurement ladite surface de réception (3),
- puis déposer un profilé de mélange caoutchouteux (P) sur une des extrémités (A') de l'armature de carcasse (A) au-dessus des surfaces d'appui (221),
- puis déployer radialement les surfaces d'appui (221) de façon à permettre le soulèvement de ladite extrémité de l'armature de carcasse et le basculement du profilé (P) axialement vers le centre de la surface de réception,
- puis retourner ladite extrémité (A') autour du profilé de mélange caoutchouteux (P) en entraînant cette dernière axialement vers le centre de la surface de réception (3),
- et positionner une tringle (T) sur le retournement ainsi réalisé et procéder à l'expansion de la surface de réception (3) afin de fixer radialement et axialement la tringle.

11. Procédé selon la revendication 10, **caractérisé par le fait que** le retournement de l'extrémité (A') de l'armature de carcasse (A) autour du profilé de mélange caoutchouteux (P) est réalisé :
- en relevant radialement ladite extrémité de sorte qu'elle soit orientée radialement,
- puis en rapprochant axialement la tringle (T) vers le centre de l'armature de carcasse (A) jusqu'à l'appui de l'extrémité (A') sur la tringle (T),
- et en poursuivant le rapprochement axial de la tringle (T) en synchronisme avec l'expansion de la surface de réception.

12. Procédé selon la revendication 11, **caractérisé par le fait que** l'on relève radialement l'extrémité (A') de l'armature de carcasse (A) en appuyant radialement vers l'extérieur du tambour (1), sous le profilé de mélange caoutchouteux (P).

13. Procédé selon l'une quelconque des revendications 10 à 12, **caractérisé par le fait que** la surface de réception possède au moins une gorge de réception ( 18) de la tringle (T) et que le profilé de mélange caoutchouteux (P) est déposé axialement extérieurement à la gorge de réception (18), à une distance de celle-ci qui est fonction de l'épaisseur (E) du profilé (P).

## Claims

1. Radially expandable assembly drum for the manufacture of a tyre (1), the drum having a body (10) having a receiving face (3) for the products to be assembled, the body being mounted on a central axle (2), the drum comprising at least one lifting device (20) formed of a plurality of lifting fingers (22, 22') distributed in a circle around the central axle (2), **characterised in that** the fingers (22, 22') extend substantially radially and have a bearing face (221) for the products to be assembled, the fingers (22, 22') being deployed essentially radially towards the outside of the drum (1) by radial translation under the action of control means (23, 23') between a rest position, in which the bearing faces (221) form extensions of the receiving surface (3), and a deployed position, in which the bearing faces (221) form a cylindrical face of a diameter larger than the receiving face (3).

2. Drum according to claim 1, **characterised in that** the control means comprise respective actuating jacks (23, 23') for each lifting finger (22, 22'), the stroke of each actuating jack (23, 23') limiting the radial displacement of the corresponding lifting finger (22, 22').

3. Drum according to either of claims 1 or 2, **characterised in that** each lifting finger (22, 22') is mounted slidingly in a groove (60) formed at the end (30) in question of the receiving face (3) and opening on to the receiving face.

4. Drum according to any one of claims 1 to 3, **characterised in that** the radially inner end (223) relative to the drum (1) of each lifting finger (22, 22') bears an axial extension (222), the axial extensions (222) being surrounded by a restoring belt (27) for moving the lifting fingers (22) back into their rest position.

5. Drum according to either of claims 2 or 3, **characterised in that** each lifting finger (22') is connected to the corresponding actuating jack (23') via a conrod (31) on which a restoring spring (32) acts.

6. Drum according to any one of claims 1 to 5, **characterised in that** the radially outer end of the lifting finger (22, 22') relative to the drum (1) bears a roller (28, 28') mounted freely rotatably.

7. Drum according to any one of claims 1 to 6, **characterised in that** the lifting fingers (22,22') are axially displaceable relative to the receiving face (3) in order to adjust the relative axial spacing of the fingers relative to the receiving face.

8. Drum according to any one of claims 1 to 7, **characterised in that** the lifting fingers (22, 22') are disposed axially external to the groove for receiving the bead wires (18) relative to the centre of the drum (1).

9. Equipment for manufacturing a tyre, the equipment comprising at least one drum (1) according to any one of claims 1 to 8 and a bead wire guide which is displaceable axially, coaxial to the central axle (2).

10. Process for manufacturing a tyre, **characterised in that** it comprises the following stages:
- deposit a carcass reinforcement (A) on a generally cylindrical receiving face (3) which is radially expandable and on bearing faces (221) which prolong the receiving face axially outwards,
- then deposit a rubber mix profile (P) on one of the ends (A') of the carcass reinforcement (A) above the bearing faces (221),
- then deploy the bearing faces (221) radially in order to permit lifting of the end of the carcass reinforcement and tilting of the profile (P) axially towards the centre of the receiving face,
- then turn up the said end (A') about the rubber mix profile (P) by driving this profile axially towards the centre of the receiving face (3),
- and position a bead wire (T) on the turn-up thus formed and proceed to expand the receiving face (3) in order to fix the bead wire radially and axially.

11. Process according to claim 10, **characterised in that** the turn-up of the end (A') of the carcass reinforcement (A) about the rubber mix profile (P) is effected:
- by lifting radially the said end in such a manner that it is oriented radially,
- then by moving the bead wire (T) axially towards the centre of the carcass reinforcement (A) until the end (A') bears on the bead wire (T),
- and in pursuing the axial movement of the bead wire (T) synchronously with expansion of the receiving face.

12. Process according to claim 11, **characterised in that** the end (A') of the carcass reinforcement (A) is lifted radially by bearing radially towards the outside of the drum (1), under the rubber mix profile (P).

13. Process according to any one of claims 10 to 12, **characterised in that** the receiving face has at least one receiving groove (18) for the bead wire (T) and the rubber mix profile (P) is disposed axially outside the receiving groove (18) at a distance therefrom which is a function of the thickness (E) of the profile (P).

## Patentansprüche

1. Radial aufweitbare Aufbautrommel für die Herstellung von Luftreifen (1), wobei die genannte Trommel ein Hauptteil (10) aufweist, das eine Aufnahmeoberfläche (3) für aufzubauende Produkte aufweist, wobei der genannte Hauptteil auf einer mittigen Welle (2) montiert ist, und wobei die genannte Trommel mindestens eine Anhebevorrichtung (20) aufweist, die aus einer Vielzahl von Anhebefingern (22, 22') gebildet ist, die kreisförmig um die mittige Welle (2) verteilt sind, **dadurch gekennzeichnet, daß** die genannten Finger (22, 22') sich deutlich radial erstrecken und eine Auflageoberfläche (221) für aufzubauende Produkte aufweisen, wobei die genannten Finger (22, 22') im wesentlichen radial zur Außenseite der Trommel (1) durch radiale Translationsbewegung unter der Wirkung von Steuermitteln (23, 23') zwischen einer Ruhelage, in der die genannten Auflageoberflächen (221) Verlängerungen der Aufnahmeoberfläche (3) bilden, und einer ausgefahrenen Lage ausfahrbar sind, in der die Auflageoberflächen (221) eine zylindrische Oberfläche mit einem Durchmesser bilden, der größer ist als die Aufnahmeoberfläche (3).

2. Trommel nach Anspruch 1, **dadurch gekennzeichnet, daß** die Steuermittel Betätigungsantriebe bzw. Betätigungszylinder (23, 23') für jeweils jeden Anhebefinger (22, 22') aufweisen, wobei der Bewegungsweg eines jeden Betätigungsantriebes (23, 23') die radiale Verlagerung des entsprechenden Anhebefingers (22, 22') beschränkt.

3. Trommel nach irgendeinem der Ansprüche 1 oder 2, **dadurch gekennzeichnet, daß** jeder Anhebefinger (22, 22') verschieblich in einer Rille (60) angebracht ist, die am in Betracht gezogenen Ende (30) der Aufnahmeoberfläche vertieft ist und auf der genannten Aufnahmeoberfläche (3) einmündet.

4. Trommel nach irgendeinem der Ansprüche 1 bis 3, **dadurch gekennzeichnet, daß** das radial innere Ende (223), in Bezug auf die Trommel (1), eines jeden Anhebefingers (22) eine axiale Verlängerung (222) trägt, wobei die axialen Verlängerungen (222) von einem Gurt (27) zur Rückstellung der Anhebefinger (22) in ihre Ruhelage umgeben sind.

5. Trommel nach irgendeinem der Ansprüche 2 oder 3, **dadurch gekennzeichnet, daß** jeder Anhebefinger (22') mit dem entsprechenden Betätigungsantrieb bzw. Betätigungszylinder (23') mittels einer Stange (31) verbunden ist, auf die eine Rückstellfeder (32) einwirkt.

6. Trommel nach irgendeinem der Ansprüche 1 bis 5, **dadurch gekennzeichnet, daß** das bezüglich der Trommel (1) radial äußere Ende der Anhebefinger (22, 22') eine zur Drehung frei angebrachte Rolle (28, 28') trägt.

7. Trommel nach irgendeinem der Ansprüche 1 bis 6, **dadurch gekennzeichnet, daß** die Anhebefinger (22, 22') bezüglich der Aufnahmeoberfläche (3) axial versetzbar sind, um ein axiales, relatives Abrücken der Finger bezüglich der genannten Aufnahmeoberfläche einzuregulieren.

8. Trommel nach irgendeinem der Ansprüche 1 bis 7, **dadurch gekennzeichnet, daß** die Anhebefinger (22, 22') axial außerhalb der Aufnahmenut (18) der Wulstkerne, auf die Mitte der Trommel (1) bezogen, angeordnet sind.

9. Apparatur zur Reifenherstellung, wobei die genannte Apparatur mindestens eine Trommel (1) nach irgendeinem der Ansprüche 1 bis 8 sowie eine axial und koaxial zur Mittelwelle (2) versetzbare Wulstkernführung umfaßt.

10. Herstellungsverfahren eines Reifens, **dadurch gekennzeichnet, daß** es die folgenden Schritte aufweist:
- Niederlegen einer Karkassenbewehrung (A) auf einer im allgemeinen zylindrischen, radial aufweitbaren Aufnahmeoberfläche (3) und auf Anlageoberflächen (221), die axial außen die genannte Aufnahmeoberfläche (3) verlängern,
- dann Niederlegen eines Profils aus kautschukartiger Mischung (P) auf einem der Enden (A') der Karkassenbewehrung (A) über den Anlageflächen (221),
- dann radiales Ausfahren der Anlageoberflächen (221) derart, daß das Anheben des genannten Endes der Karkassenbewehrung und das Kippen des Profils (P) axial zur Mitte der genannten Aufnahmeoberfläche hin gestattet ist,
- dann Umschlagen des genannten Endes (A') um das Profil aus kautschukartiger Mischung (P) herum, indem man dieses axial zur Mitte der Aufnahmeoberfläche (3) hin antreibt,
- und Positionieren des Wulstkerns (T) auf dem so hergestellten Umschlag und Fortfahren mit der Aufweitung der Aufnahmeoberfläche (3), um den Wulstkern radial und axial festzulegen.

11. Verfahren nach Anspruch 10, **dadurch gekennzeichnet, daß** der Umschlag des Endes (A') der Karkassenbewehrung (A) um das Profil (P) aus kautschukartiger Mischung dadurch ausgeführt wird, daß
- man das genannte Ende radial derart anhebt, daß es radial ausgerichtet ist,
- man dann axial den Wulstkern (T) gegen die Mitte der Karkassenbewehrung (A) annähert, bis zur Auflage des Endes (A') auf dem Wulstkern (T), und
- man die axiale Annäherung des Wulstkernes (T) synchron mit der Aufweitung der Aufnahmeoberfläche fortsetzt.

12. Verfahren nach Anspruch 11, **dadurch gekennzeichnet, daß** man das Ende (A') der Karkassenbewehrung (A) radial anhebt, indem man radial zur Außenseite der Trommel (1) unter dem Profil (P) aus kautschukartiger Mischung andrückt.

13. Verfahren nach irgendeinem der Ansprüche 10 bis 12, **dadurch gekennzeichnet, daß** die Aufnahmeoberfläche mindestens eine Aufnahmenut (18) für den Wulstkern (T) aufweist, und daß das Profil aus kautschukartiger Mischung (P) axial außerhalb der Aufnahmenut (18) in einem Abstand von dieser aufgelegt wird, die abhängig ist von der Dicke (E) des Profils (P).
